# EUROPÄISCHE PATENTSCHRIFT

(11) **EP 0 819 838 B1**
(45) Veröffentlichungstag und Bekanntmachung des Hinweises auf die Patenterteilung: **21.11.2001**
(21) Anmeldenummer: 97111916.9
(22) Anmeldetag: 14.07.1997
(51) Int. Cl.: F02B 19/14

(54) **Mehrstoffverbrennungsmotor und Verwendung desselben**
Multifuel combustion engine and its use
Moteur à combustion polycarburant et son application

(30) Priorität: 18.07.1996 CH 179696
(43) Veröffentlichungstag der Anmeldung: 21.01.1998
(73) Patentinhaber: Mahler, Willi, CH-8912 Obfelden (CH)
(72) Erfinder: Mahler, Willi, CH-8912 Obfelden (CH)

(56) Entgegenhaltungen:
- WO-A-84/02378
- WO-A-88/01683
- CH-A- 197 393
- DE-C- 837 486
- GB-A- 123 398
- GB-A- 294 704
- GB-A- 560 734
- GB-A- 2 016 594

## Beschreibung

Die Erfindung betrifft einen Mehrstoffverbrennungsmotor nach dem Oberbegriff des Patentanspruchs **1** sowie Verwendungen des Mehrstoffverbrennnungsmotors nach den Patentansprüchen **9** und **10**.

Fahrzeuge, die leistungsstarke Antriebe benötigen, werden vorwiegend mit Verbrennungsmotoren ausgerüstet, die als Treibstoff bzw. Kraftstoff fossile Brennstoffe, im allgemeinen Kohle oder Erdölfraktionen benötigen. Neben Dampfmaschinen, die praktisch nur noch für Schienenfahrzeuge benützt werden, und die als Kraftstoff Kohle verwenden, haben sich weitgehend Explosionsmotoren wie Otto- und Dieselmotoren durchgesetzt. Deren Betrieb bringt zahlreiche Nachteile mit sich, von welchen insbesondere der Schadstoffausstoss, der Verbrauch von nicht kurzfristig reproduzierbarem Kraftstoff in Form von Erdölfraktionen sowie der zusätzliche Verbrauch von Kraftstoff zum Zubringen des Kraftstoffes von der Fundstelle zum Endverbraucher genannt sein sollen. Ein weiterer Nachteil, der besonders bei der Verwendung der Fahrzeuge zu militärischen Zwecken wesentlich ist, ist die Abhängigkeit von einigen wenigen Kraftstofflieferanten. Bei der Verwendung von Elektro- oder Solarantrieben fallen zwar die genannten Nachteile weg, jedoch eignen sich weder Solar- noch Elektroantriebe zur Erzeugung hoher Antriebsleistungen. Es wird daher seit langem versucht, Verbrennungsmotoren zu konstruieren, die nicht mit fossilen Kraftstoffen sondern mit anderen, insbesondere mit kurzfristig herstellbaren bzw. reproduzierbaren Kraftstoffen betrieben werden können. Besonders erwähnenswert sind Mehrstoffverbrennungsmotoren, die sich ohne Ummontierung oder Umstellung mit verschiedenartigen Kraftstoffen betreiben lassen, beispielsweise neben fossilen Kraftstoffen auch mit grosstechnisch hergestellten Kraftstoffen wie sie häufig für militärische Fahrzeuge verwendet werden oder mit Kraftstoffen aus tierischen und pflanzlichen Ölen und Fetten. Ökologisch und ökonomisch besonders vorteilhaft ist es, wenn Kraftstoff aus Abfallprodukten wie zum Beispiel aus Tierkadavem, aus verbrauchtem Backöl oder aus Flotatschwämmen von Kläranlagen gewonnen werden kann. Selbstverständlich eignen sich auch frisch gepresste und gefilterte Pflanzenöle als Kraftstoff.

Zur Erzielung eines hohen Wirkungsgrades wird eine möglichst vollständige Verbrennung angestrebt, wofür eine intensive Verwirbelung des Kraftstoff/Luft-Gemisches während des Ansaugtaktes von ausschlaggebender Bedeutung ist. Diese ergibt sich als Folge einer turbulenten Misch-Strömung, wie sie beim Wirbelkammerverfahren stattfindet. Bei konventionellen Motoren ist eine Verwirbelungskammer im Kolben angeordnet. Besser ist es jedoch, die Verwirbelungskammer im Zylinderkopf vorzusehen; bei einer solchen Konstruktion wird die Verwirbelungskammer während des Ansaugtaktes von Luft durchströmt, wobei sie eine effiziente Spülung und Kühlung erfährt. Während des anschliessenden Arbeitstaktes erhält man dadurch eine höhere Sauerstoffmenge bzw. einen besseren Füllungsgrad im Zylinder. Die Folge davon ist, dass eine grössere Menge an Kraftstoff verbrannt und damit eine höhere abgegebene Leistung erzielt werden, ohne dass sich dadurch die Russentwicklung steigern würde.

Ein Ottomotor, also ein Motor mit Zündkerzen, der eine Verwirbelungskammer im Zylinderkopf besitzt, ist in der **DE-29 13 763 C2** beschrieben. Gerade für robuste, pflegeleichte Fahrzeuge wie beispielsweise für militärische oder landwirtschaftliche Fahrzeuge bevorzugt man aber im allgemeinen selbstzündende Verbrennungsmotoren, d.h. Verbrennungsmotoren nach dem Wirkungsprinzip des Dieselmotors. Ein solcher Motor mit einer Verwirbelungs- und Brennkammer im Zylinderkopf und einer Einspritzdüse, welche den Kraftstoff in Richtung einer Sekante der einen kreisförmigen Grundriss aufweisende Verwirbelungs-und Brennkammer zuführt, ist aus der **GB-2 016 594** bekannt. Der hauptsächliche Nachteil dieses und anderer vorbekannter Pflanzenölmotoren ist darin zu sehen, dass die Verwirbelung bzw. die Mischung des Kraftstoffes mit der Luft mindestens im Bereich der Düsenaustrittsöffnung unbefriedigend, was - wie weiter oben erwähnt - letztlich eine mangelhafte Leistungsausbeute des Kraftstoffes zur Folge hat. Um diesen Nachteil zu vermeiden, wurde schon versucht, eine Düse mit mehreren Austrittsöffnungen zu verwenden, da eine solche bei der Verbrennung von Dieselöl erfahrungsgemäss zu einer Verbesserung der Verwirbelung führt. Leider eignen sich aber solche Mehrlochdüsen infolge der bei der Verbrennung von Pflanzenöl stärkeren Verkokung bzw. Verrussung nicht für Mehrstoffverbrennungsmotoren.

Aus WO-A-84/02378 ist ein Dieselmotor mit direkter Einspritzung des Brennstoffes bekanntgeworden. Ein Ventilraum dient zur Aufnahme des Einlassventils, während der Ventilraum zur Aufnahme des Auslassventils dient. Durch den Lauf des Kolbens nach unten wird über die Einlassöffnung Luft angesogen. Hierauf wird die angesogene Luft zwischen dem Kolbenboden und dem Zylinderkopf komprimiert. Ueber ein Ventil wird der Brennstoff in die Brennkammer eingedüst, worauf der Zündungsvorgang eingeleitet wird. Das Ausblasen des Abgases erfolgt über ein Auslassventil. Dabei wird durch die direkte Einspritzung die thermische Belastung des Kolbens zwar kleiner, insbesondere bei Verwandung von nicht hochraffinierten Brennstoffen, hier ist jedoch mit grösseren Schadstoffemissionen zu rechnen, welche auf eine mangelhafte Verwirbelung des Verbrennungsluft zurüchzuführen ist

Aus WO-A-88/01683 ist eine Brennstoffeinspritzung für einen Dieselmotor mit mehreren Düsen bekanntgeworden, bei welchem Dieselmotor vor der Hauptverbrennung die erforderliche Mischung von Luft und vergastem Brennstoff angestrebt wird. Dabei wird zur Verminderung von Schadstoffemissionen mit mehreren Einspritzdüsen operiert, welche das Ziel haben, den Mischvorgang und damit die Einspritzzeit zu verkürzen, wobei der beschleunigte Mischvorgang zur schnellen Verdampfung des Brennstoffes genutzt wird. Zwar ist es richtig, dass durch die Anordnung mehrerer Einspritzdüsen am Umfang die Einspritzzeit verkürzt wird, indessen ist der Grad der Vermischung sehr gewichtig von der Verwirbelungsgüte der Verbrennungsluft abhängig, d.h. die Verkürzung der Einspritzzeit führt allein nicht zum Erfolg, wenn daneben nicht gezielt auf die Kompenenten der Wirbelluftschicht eingewirkt wird. Die Wirbelluftschicht muss deshalb physikalisch so beschaffen sein, dass der eingespritze Brennstoff vor seiner Zündung vollständig vergast ist, was nur möglich ist, wenn die aus diesen Komponenten hervorgehenden Luftkräfte gepaart mit einer entsprechend vorherrschenden Temperatur ebendiese Vergasung der Brennstofftröpfchen bewirken können.

Die erste Aufgabe der Erfindung wird nun darin gesehen, einen Mehrstoffverbrennungsmotor der eingangs genannten Art so zu verbessern, dass unter Vermeidung von Verkokung eine optimale Vermischung des in die Verwirbelungs- und Brennkammer eingedüsten Kraftstoffes mit der zugeführten Luft stattfindet. Die zweite Aufgabe der Erfindung betrifft die Verwendung des neuen Mehrstoffverbrennungsmotors.

Diese Aufgaben werden erfindungsgemäss durch die Merkmale der Patentansprüche **1** sowie **9** und **10** gelöst.

Vorteilhafte Weiterbildungen des erfindungsgemässen Mehrstoffverbrennungsmotors werden durch die vom Patentanspruch **1** abhängigen Ansprüche definiert.

Der erfindungsgemässe Mehrstoffverbrennungsmotor weist somit wie die vorbekannten Motoren einen Zylinder mit einem verschiebbar darin angeordneten Kolben auf, wobei in üblicher Weise an den Zylinder ein Zylinderkopf angrenzt. Der Zylinderkopf enthält einen Luftansaugkanal und daran anschliessend eine Verwirbelungs- und Brennkammer, welche in den Zylinder mündet. Im weiteren enthält der Zylinderkopf mindestens ein Lufteinlassventil, welches den Luftansaugkanal und die Verwirbelungs- und Brennkammer in seiner Schliessstellung trennt und in seiner Offenstellung verbindet. Die Verwirbelungs- und Brennkammer weist mindestens annähernd die Form eines Rotationskörpers auf, dessen Achse etwa oder genau parallel zur Längsachse des Zylinders verläuft. Zur Zufuhr des Kraftstoffes in die Verwirbelungs- und Brennkammer, das heisst zur Direkteinspritzung, ist beim vorbekannten Motor eine Kraftstoffdüse angeordnet, welche den Kraftstoff horizontal in Richtung einer Sekante der Verwirbelungs- und Brennkammer in diese eindüst. Erfindungsgemäss ist nun mindestens eine weitere Kraftstoffdüse im selben Querschnittsbereich der Verwirbelungs- und Brennkammer vorgesehen, und die Kraftstoffdüsen sind so angeordnet, dass der Kraftstoff tangential zu einer gemeinsamen, fiktiven, längs der Innenwandung der Verwirbelungs- und Brennkammer auf den Zylinder zu laufenden Spiralenlinie eingedüst wird. Dadurch erhält man eine optimale Verwirbelung und damit eine innige Vermischung des Kraftstoffs mit der Luft im ganzen Bereich der Verwirbelungs- und Brennkammer und demzufolge wie schon beschrieben eine im wesentlichen vollständige Verbrennung, wobei gleichzeitig der Nachteil der Verkokung vermieden wird, weil der Kraftstoff und damit infolge der Verwirbelung auch das Kraftstoff/Luft-Gemisch die Verwirbelungs- und Brennkammer in einem turbulenten, zum Zylinder führenden Wirbel durchströmt und kühlt.

Der erfindungsgemässe Mehrstoffverbrennungsmotor kann im weiteren eine Glühkerze aufweisen, um bei Bedarf in bekannter Weise die Zündung des Kraftstoff/Luft-Gemisches zu initialisieren; vorzugsweise ist die Glühkerze so angeordnet, dass ihre Wirkflächen der Richtung der Spiralenlinie, längs welcher sich die Strömung des Kraftstoff/Luft-Gemisches bewegt, entgegengesetzt ist und somit vom Kraftstoff/Luft-Gemisch direkt angeströmt wird.

Besonders effizient ist diese Anordnung, wenn zu jeder Kraftstoffdüse eine eigene Glühkerze vorgesehen ist.

Die Verwirbelungs- und Brennkammer ist vorzugsweise nicht wie bei vorbekannten Motoren zylindrisch sondern kugelig oder kugelähnlich ausgebildet. Eine solche Verwirbelungs-und Brennkammer ist strömungsgünstiger als eine zylindrische, womit man mehrere wesentliche Ziele erreicht, die letzlich alle eine Verbesserung der Verbrennung und damit eine höhere Ausbeute des Kraftstoffes zur Folge haben: wegen des geringeren Strömungswiderstandes wird eine grössere Luftmenge gefördert und in der Folge die Turbulenz und damit die Verwirbelung verbessert, und gleichzeitig wird die Kühlung der Wandung erleichtert.

Um die Verwirbelungs- und Brennkammer strömungsgünstig zu gestalten, kann auch die ihr zugewandte Fläche des Ventiltellers des Lufteinlassventils kalottenförmig ausgenommen sein, so dass in der Schliessstellung des Lufteinlassventils die Verwirbelungs- und Brennkammer kuppelartig überwölbt ist.

Wie schon mehrfach erwähnt, bildet bei der Verwendung von Pflanzenöl wie zum Beispiel Rapsöl die Verkohlung insgesamt ein Problem, das sich natürlcih auch im Bereich der Kolbenringe manifestieren kann. Um diesem Nachteil abzuhelfen, können anstelle üblicher Kolbenringe Spezielkolbenringe wie Trapezringe vorgesehen sein, wobei insbesondere der der Verwirbelungs- und Brennkammer benachbarte Kolbenring als Spezialkolbenring ausgebildet werden sollte.

Der erfindungsgemässe Mehrstoffverbrennungsmotor kann so ausgebildet sein, dass er zu jedem Lufteinlassventil mehrere, beispielsweise vier Abgasauslassventile besitzt. Er kann natürlich auch mehrere Lufteinlassventile enthalten.

Die Verwendung des erfindungsgemässen Mehrstoffverbrennungsmotors ist mit verschiedenen Kraftstoffen möglich. In vielen Fällen ist die Verwendung von Pflanzenöl, vorzugsweise in reiner, unveresterter, ggfs. glyzerinhaltiger Form, besonders günstig.

Bevorzugt wird der neue Vielstoffmotor für Maschinen und Fahrzeuge, insbesondere im landwirtschaftlichen oder kleingewerblichen Bereich, verwendet.

Die Verwendung des Mehrstoffverbrennungsmotors nach der Erfindung zum Antrieb von landwirtschaftlichen Maschinen und Fahrzeugen mit Pflanzenöl als Kraftstoff zeitigt zahlreiche Vorteile, die besonders bei der Verwendung des Mehrstoffverbrennungsmotors in Entwicklungsländern ökologisch und ökonomisch ins Gewicht fallen: es muss kein fossiler Kraftstoff importiert und unter Verbrauch von weiterem fossilem Kraftstoff dem Endverbraucher zugeführt werden, sondern der Kraftstoff kann in einfacher Weise gewissermassen an Ort hergestellt werden; der Kultivierung von ölliefernden Pflanzen steht nichts im Wege, da im allgemeinen sowohl Land wie auch Arbeitskräfte zur Verfügung stehen; insbesondere kann die Kultur ölliefemder Pflanzen den Anbau von Kokain ersetzen, was im Hinblick auf eine Verminderung des Drogenproblems sehr erwünscht wäre. Der in situ und nicht in einer Raffinerie hergestellte Kraftstoff, ist, wie schon erwähnt, nicht verestert sondern naturbelassen. Der neue Mehrstoffverbrennungsmotor ist im Betrieb und im Unterhalt problemlos, was gerade in Drittweltländern von entscheidender Bedeutung ist. So muss er beispielsweise erst bei sehr tiefen Temperaturen, ab ca -5 grad Celsius, mit beigemischtem Viskositätsverbesserer vorgewärmt werden. Im Gegensatz zu vorbekannten Dieselmotoren, die bei geringer Last bzw. kurzen Strecken, also sehr häufig, nur mit Dieselkraftstoff, jedoch nicht mit Pflanzenöl betrieben werden können, lässt sich der erfindungsgemässe Mehrstofverbrennungsmotor auch bei geringer Last bzw. auf Kurzstrecken mit Pflanzenöl betreiben, obwohl natürlich ein Betrieb mit Dieselkraftstoff stets möglich ist.

Weitere Einzelheiten und Vorteile der Erfindung werden im folgenden anhand von Ausführungsbeispielen und mit Bezug auf die Zeichnung beschrieben. Es zeigt:
- **Fig. 1**: einen Zylinderkopf und einen Zylinder eines Mehrstoffver brennungsmotors nach der Erfindung, in einem Schnitt längs der Zylinderlängsachse:
- **Fig. 2**: den in **Fig. 1** dargestellten Zylinderkopf in einem Schnitt quer zur Zylinderlängsachse, mit Angabe des Linienzuges **I-I**, welcher die Lage des in **Fig. 1** dargestellten Schnittes angibt; und
- **Fig. 3**: einen Zylinderkopf eines weiteren Mehrstoffverbrennungsmotors, in gleicher Darstellung wie **Fig. 2**.

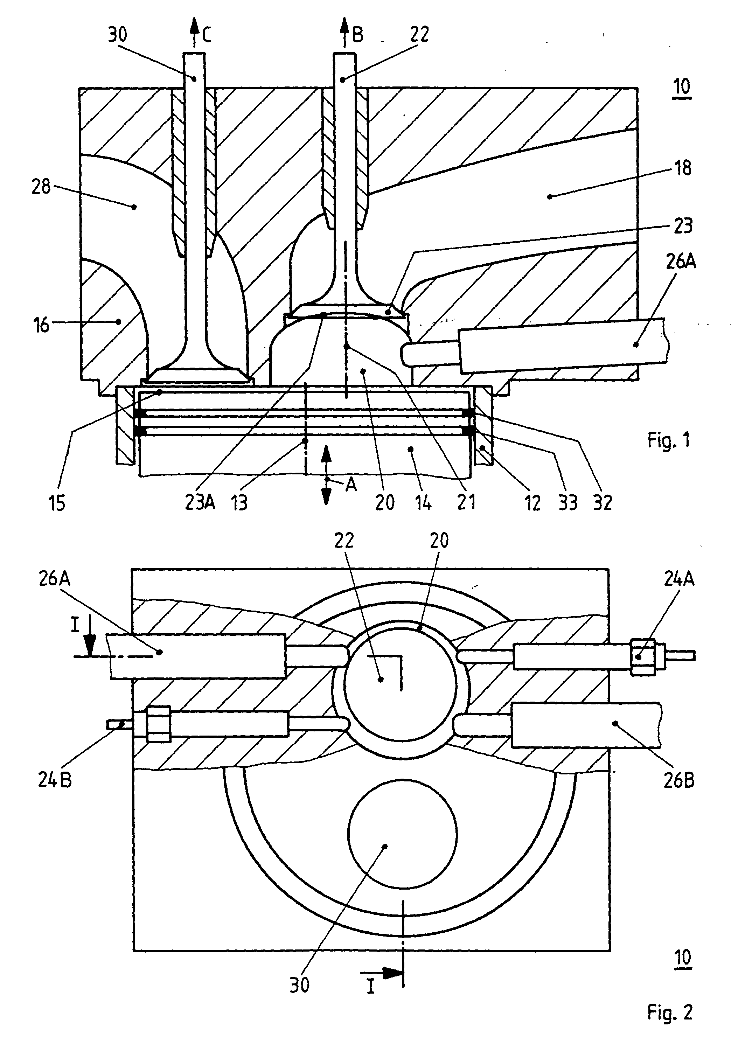

Der in **Fig. 1** und **Fig. 2** ausschnittweise dargestellte Mehrstoffverbrennungsmotor **10** weist einen Zylinder **12** und einen im Zylinder **12** in Richtung des Doppelpfeiles **A** verschiebbar angeordneten Kolben **14** mit einem flachen Kolbenboden **15** auf. An den Zylinder **12** schliesst sich, in **Fig. 1** oben, ein Zylinderkopf **16** an. Der Zylinderkopf **16** enthält einen gekrümmten Luftansaugkanal **18** sowie eine an den Luftansaugkanal **18** anschliessende Verwirbelungs-und Brennkammer **20**, welche die Form eines etwa sphärischen Rotationskörpers besitzt, dessen Achse **21** parallel zur Achse **13** des Zylinders **12** verläuft. Anstelle eines Rotationskörpers kann die Verwirbelungs- und Brennkammer **20** im Querschnitt auch eine andere, vorzugsweise abgerundete, beispielsweise elliptische Form aufweisen. Im weiteren enthält der Zylinderkopf **16** ein Lufteinlassventil **22** mit einem Ventilteller **23**; in seiner dargestellten Schliesslage trennt das Lufteinlassventil **22** den Luftansaugkanal **18** von der Verwirbelungs- und Brennkammer **20**, während in seiner Offenstellung, das heisst wenn es in Richtung des Pfeiles **B** nach oben verschoben ist, der Luftansaugkanal **18** mit der Verwirbelungs- und Brennkammer **20** verbunden ist. Die der Verwirbelungs- und Brennkammer **20** zugewandte Fläche **23A** des Ventiltellers **23** ist nach oben gewölbt. Im weiteren sind zwei Kraftstoffdüsen **24A, 24B** vorgesehen, die punktsymmetrisch zur Verwirbelungs- und Brennkammer **20** angeordnet sind und etwa tangentail in diese einmünden, und die nicht senkrecht sondern schräg abwärts unter einem Winkel von etwas weniger als **90** grad zur Achse **21** gerichtet sind. Der Kraftstoff wird also so in die Verwirbelungs- und Brennkammer **20** eingedüst, dass er - natürlich vor seiner Verwirbelung und Verteilung - von zwei Seiten tangential zu einer im Inneren der Verwirbelungs- und Brennkammer **20** auf den Zylinder **12** zu laufenden fiktiven Spiralenlinie einströmt. Im weiteren enthält der Zylinderkopf **16** zwei ebenfalls punktsymmetrisch angeordnete und etwa tangential in die Verwirbelungs- und Brennkammer **20** ragende Glühkerzen **26A, 26B**, die gewissermassen im entgegengesetzten Drehsinn zur genannten fiktiven Spirale gerichtet sind, so dass sie bzw. ihre Wirkflächen vom Kraftstoff/Luftgemisch direkt angeströmt werden. Schliesslich enthält der Zylinderkopf **16** einen an den Zylinder **12** angrenzenden Abgaskanal **28** und ein Abgasauslassventil **30**, das in seiner dargestellten Schliesslage den Zylinder **12** vom Abgaskanal **28** trennt und in seiner Offenstellung, wenn es in Richtung des Pfeiles C nach oben verschoben ist, den Zylinder **12** und den Abgaskanal **28** verbindet. In **Fig. 1** sind noch zwei Kolbenringe **32, 33** sichtbar, von denen der der Verwirbelungs- und Brennkammer **20** benachbarte Kolbenring **32** als Trapezring ausgebildet ist.

Die Wirkungsweise der beschriebenen Teile ist wie folgt: Während des Ansaugtaktes verschiebt sich der Kolben **14** aus seiner dargestellten Endlage nach unten. Sobald das Lufteinlassventil **22** geöffnet wird, strömt Luft durch den Ansaugkanal **18** in die Verwirbelungs- und Brennkammer **20**, wo sie - ohne Beeinflussung durch den eingedüsten Kraftstoff - im wesentlichen vertikal etwa längs der Wandung der Verwirbelungs- und Brennkammer **20** weiterströmen würde. Nun wird der Kraftstoff aus den Kraftstoffdüsen **24** zugeführt bzw. eingespritzt, und zwar, wie oben beschrieben, so, dass er sich - ohne Beeinflussung durch die Luft - etwa längs der genannten fiktiven Spiralenlinie bewegen würde. Durch die neue Anordnung der Kraftstoffdüsen **24A, 24B** erhält man auch bei Verwendung von Einlochdüsen eine nahezu perfekte Verwirbelung und damit eine intensive Vermischung des Kraftstoffes mit der Luft. Aus der Luft und dem Kraftstoff entsteht dabei eine Strömung mit einer tangentialen und einer achsialen Komponente und mit hoher Turbulenz. Dadurch erfolgt eine nahezu homogene Feinverteilung des tröpfchenförmigen Kraftstoffes in der Luft. Beim Anfahren zünden die Glühkerzen **26A, 26B** in üblicher Weise das Kraftstoff/Luft-Gemisch, bis nach genügender Erwärmung die Selbstzündung in Gang kommt. Um dabei eine Russbildung zu vermeiden, kann vorübergehend eine der Kraftstoffdüsen **24A, 24B** inaktiviert werden, so dass ein magereres Kraftstoff/Luft-Gemisch entsteht. Sind mehr als zwei Kraftstoffdüsen vorgesehen, so lässt sich die Magerkeit des Kraftstoff/Luft-Gemisches in feineren Abstufungen einstellen.

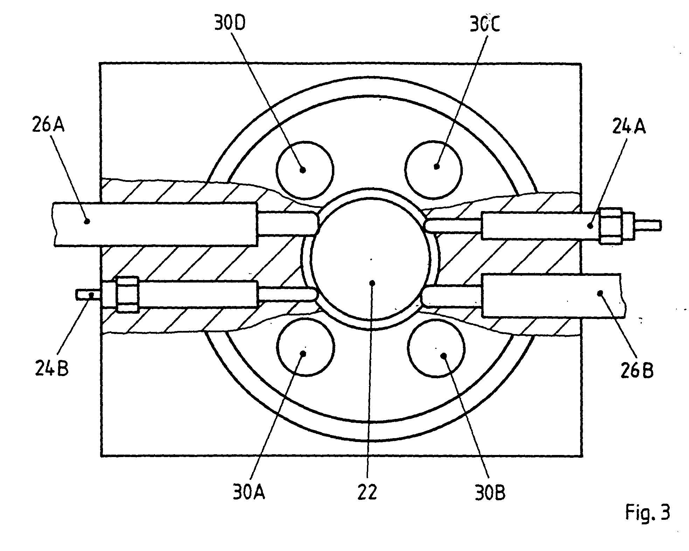

Bei der in **Fig. 3** dargestellten Ausführung des Zylinderkopfes **16** ist die Verwirbelungs- und Brennkammer **20** mit dem Lufteinlassventil **20** zentral angeordnet, während anstelle des einen Abgasauslassventils **30** gemäss **Fig. 1** und **Fig. 2** vier symmetrisch um die Verwirbelungs- und Brennkammer **20** angeordnete Abgasauslassventile **30A, 30B, 30C, 30D** vorgesehen sind. Der Vorteil dieser konstruktiv aufwendigeren Ausführung besteht darin, dass die erhöhte Symmetrie die Qualität der Verbrennung steigert und den Kraftaufwand beim Ausstossen der Abgase vermindert.

## Patentansprüche

1. Mehrstoffmotor **(10)** mit Kraftstoffeinspritzung und Kompressionszündung, mit einem Zylinder **(12)**, in welchem ein Kolben **(14)** verschiebbar angeordnet ist, mit einem Zylinderkopf **(16)**, in welchem ein Luftansaugkanal **(18)**, eine an die Oeffnung des Zylinders **(12)** angrenzende, im wesentlichen die Form eines Rotationskörpers, zum Zylinder **(12)** mindestens annähernd achsparallel Verwirbelungs- und Brennkammer **(20)**, eine in die Verwirbelungs- und Brennkammer **(20)** mündende erste Kraftstoffdüse **(24A oder 24B)** und mindestens ein Lufteinlassventil **(22)** den Luftansaugkanal **(18)** und die Verwirbelungs und Brennkammer **(20)** in seiner Offenstellung verbindet und in seiner Schliessstellung trennt,
**dadurch gekennzeichnet**,
a) dass mindestens eine weitere Kraftstoffdüse **(24A, 24B)** im selben Querschnittsbereich der Verwirbelungs- und Brennkammer wie die erste Düse vorgesehen ist,
b) dass die Kraftstoffdüsen **(24A, 24B)** so angeordnet sind, dass der Kraftstoff tangential zu einer gemeinsamen, längs der Innenwand der Verwirbelungs- und Brennkammer auf den Zylinder zu laufenden Wirbelluftschicht eingedüst wird und
c) dass die Wirbelluftschicht eine tangentiale und axiale Komponente aufweist.

2. Mohrstoffmotor **(10)** nach Anspruch 1, **dadurch gekennzeichnet, dass** mindestens eine Glühkerze **(26A, 26B)** tangential in die Verwirbelungs- und Brennkammer **(20)** ragt, welche so ausgerichtet ist, dass ihre Wirkfläche der Richtung der Wirbelluftschicht entgegengesetzt ist.

3. Mehrstoffmotor **(10)** nach Patentanspruch **2**,
**dadurch gekennzeichnet,**
**dass** zu jeder Kraftstoffdüse **(24A, 24B)** eine Glühkerze **(26A, 26B)** angeordnet ist.

4. Mehrstoffmotor **(10)** nach Patentanspruch **1**,
**dadurch gekennzeichnet,**
**dass** die Verwirbelungs- und Brennkammer **(20)** im wesentlichen kugelig oder kugelähnlich ausgebildet ist

5. Mehrstoffmotor **(10)** nach Patentanspruch **1**,
**dadurch gekennzeichnet,**
**dass** die der Verwirbelungs- und Brennkammer **(20)** zugewandte Fläche **(23A)** des Ventiltellers **(23)** des Lufteinlassventils **(22)** kalottenartig ausgebildet ist, um in der Schliessstellung des Lufteinlassventils **(22)** die Verwirbelungs- und Brennkammer **(20)** kuppelartig zu überwölben.

6. Mehrstoffmotor **(10)** nach Patentanspruch **1**,
**dadurch gekennzeichnet,**
**dass** mindestens ein der Verwirbelungs- und Brennkammer **(20)** benachbarter Kolbenring als Trapezring **(32)** ausgebildet ist.

7. Mehrstoffmotor **(10)** nach Patentanspruch **1**,
**dadurch gekennzeichnet,**
**dass** der Kolben **(14)** in leichter Ausführung, beispielsweise aus Leichtmetall und/oder in Leichtbauweise gefertigt ist.

8. Mehrstoffmotor **(10)** nach Patentanspruch **1**,
**dadurch gekennzeichnet,**
**dass** er zu jedem Lufteinlassventil **(22)** eines oder mehrere, vorzugsweise symmetrisch um das Lufteinlassventil angeordnete, Abgasauslassventile **(30)** aufweist.

9. Verwendung des Mehrstoffmotors **(10)** nach Patentanspruch **1**,
**dadurch gekennzeichnet,**
**dass** als Treibstoff Pflanzenöl verwendet wird, vorzugsweise in reiner, unveresterter, ggfs. glyzerinhaltiger Form.

10. Verwendung des Mehrstoffmotors **(10)** nach Patentanspruch **1**,
**dadurch gekennzeichnet**,
er in Fahrzeuge und Maschinen eingebaut, jeweils vorzugsweise für landwirtschaftliche oder kleingewerbliche Zwecke, eingebaut ist.

## Claims

1. Multi-fuel engine (10) with fuel injection and compression ignition, with a cylinder (12), in which a piston (14) is displaceably arranged, and with a cylinder head (16), in which are arranged an air intake duct (18), a swirl and combustion chamber (20) which is adjacent to the orifice of the cylinder (12) and is essentially in the form of a body of revolution and which is at least approximately axially parallel to the cylinder (12), a first fuel nozzle (24A or 24B) issuing into the swirl and combustion chamber (20) and at least one air inlet valve (22) which, in its open position, connects the air intake duct (18) and the swirl and combustion chamber (20) and, in its closed position, separates these,
**characterized**
a) in that at least one further fuel nozzle (24A, 24B) is provided in the same cross-sectional region of the swirl and combustion chamber as the first nozzle,
b) in that the fuel nozzles (24A, 24B) are arranged in such a way that the fuel is injected tangentially to a common fluidized air bed running along the inner wall of the swirl and combustion chamber towards the cylinder, and
c) in that the fluidized air bed has a tangential and an axial component.

2. Multi-fuel engine (10) according to Claim 1, **characterized in that** at least one spark plug (26A, 26B) projects tangentially to the swirl and combustion chamber (20) and is oriented in such a way that its active surface is opposite to the direction of the fluidized air bed.

3. Multi-fuel engine (10) according to Patent Claim 2, **characterized in that** one spark plug (26A, 26B) is arranged for each fuel nozzle (24A, 24B).

4. Multi-fuel engine (10) according to Patent Claim 1, **characterized in that** the swirl and combustion chamber (20) has an essentially spherical or sphere-like design.

5. Multi-fuel engine (10) according to Patent Claim 1, **characterized in that** the surface (23A) of the valve disc (23) of the air inlet valve (22) which confronts the swirl and combustion chamber (20) has a cap-like design, in order to arch over the swirl and combustion chamber (20) in a dome-like manner when the air inlet valve (22) is in the closing position.

6. Multi-fuel engine (10) according to Patent Claim 1, **characterized in that** at least one piston ring adjacent to the swirl and combustion chamber (20) is designed as a trapezoidal ring (32).

7. Multi-fuel engine (10) according to Patent Claim 1, **characterized in that** the piston (14) is manufactured in a light-weight version, for example from light metal and/or in a light-weight form of construction.

8. Multi-fuel engine (10) according to Patent Claim 1, **characterized in that**, for each air inlet valve (22), it has one or more exhaust-gas outlet valves (30) arranged preferably symmetrically around the air inlet valve.

9. A use of the multi-fuel engine (10) according to Patent Claim 1, **characterized in that** vegetable oil, preferably in pure, non-esterified, if appropriate glycerol-containing form, is used as fuel.

10. A use of the multi-fuel engine (10) according to Patent Claim 1, **characterized in that** it is installed in vehicles and machines, in each case preferably for agricultural or small-scale industrial purposes.

## Revendications

1. Moteur multicarburant (10) avec injection de carburant et allumage par compression, avec un cylindre (12), dans lequel est disposé un piston coulissant (14), avec une culasse de cylindre (16), dans laquelle sont disposés un canal d'aspiration d'air (18), une chambre de turbulence et de combustion (20) jointive à l'ouverture du cylindre (12), ayant sensiblement la forme d'un corps de révolution et d'axe au moins sensiblement parallèle au cylindre (12), un premier injecteur de carburant (24A ou 24B) débouchant dans la chambre de turbulence et de combustion (20), et au moins une soupape d'admission d'air (22) qui relie le canal d'aspiration d'air (18) et la chambre de turbulence et de combustion (20) en position ouverte et les sépare en position fermée, **caractérisé en ce que**
a) il est prévu au moins un autre injecteur de carburant (24A, 24B) dans la région de la même section transversale de la chambre de turbulence et de combustion que le premier injecteur, **en ce que**
b) les injecteurs de carburant (24A, 24B) sont disposés de manière telle que le carburant soit injecté tangentiellement à une couche d'air turbulente commune qui circule le long de la paroi intérieure de la chambre de turbulence et de combustion en direction du cylindre, et **en ce que**
c) la couche d'air turbulente présente une composante tangentielle et une composante axiale.

2. Moteur multicarburant (10) suivant la revendication 1, **caractérisé en ce qu'**au moins une bougie (26A, 26B) pénètre tangentiellement dans la chambre de turbulence et de combustion (20), bougie qui est orientée de telle manière que sa face active soit opposée au sens de la couche d'air turbulente.

3. Moteur multicarburant (10) suivant la revendication 2, **caractérisé en ce qu'**un bougie (26A, 26B) est disposée à chaque injecteur de carburant (24A, 24B).

4. Moteur multicarburant (10) suivant la revendication 1, **caractérisé en ce que** la chambre de turbulence et de combustion (20) est essentiellement sphérique ou analogue à une sphère.

5. Moteur multicarburant (10) suivant la revendication 1, **caractérisé en ce que** la face (23A) du plateau de soupape (23) de la soupape d'admission d'air (22) tournée vers la chambre de turbulence et de combustion (20) a la forme d'une calotte, pour former une voûte en forme de coupole dans la chambre de turbulence et de combustion (20) dans la position fermée de la soupape d'admission d'air (22).

6. Moteur multicarburant (10) suivant la revendication 1, **caractérisé en ce qu'**au moins un segment de piston voisin de la chambre de turbulence et de combustion (20) est un segment trapézoïdal (32).

7. Moteur multicarburant (10) suivant la revendication 1, **caractérisé en ce que** le piston (14) est un modèle léger, par exemple en métal léger et/ou de type avion.

8. Moteur multicarburant (10) suivant la revendication 1, **caractérisé en ce qu'**il présente, pour chaque soupape d'admission d'air (22), une ou plusieurs soupapes d'échappement des gaz (30), disposées de préférence symétriquement autour de la soupape d'admission d'air.

9. Utilisation du moteur multicarburant (10) suivant la revendication 1, **caractérisée en ce que** l'on utilise comme carburant une huile végétale, de préférence sous forme pure, désestérifiée, le cas échéant contenant de la glycérine.

10. Utilisation du moteur multicarburant (10) suivant la revendication 1, **caractérisée en ce qu'**il est monté dans des véhicules et des machines, respectivement de préférence pour des besoins de l'agriculture ou des petites entreprises.
